# EUROPEAN PATENT APPLICATION

(11) **EP 1 029 590 A1**
(43) Date of publication of application: **23.08.2000**
(21) Application number: 00300083.3
(22) Date of filing: 07.01.2000
(51) Int. Cl.: B01J 20/20, B01J 20/28

(54) **Adsorbent fabric**

(30) Priority: 15.02.1999 GB 9903423
(71) Applicant: The BOC Group plc, Windlesham Surrey GU20 6HJ (GB)
(72) Inventor: Garrett, Michael Ernest, Woking, Surrey GU22 7XR (GB)
(74) Representative: MacLean, Martin David

(57) **Abstract**

A fabric material for use as an adsorbent at cryogenic temperatures comprising woven carbon fibres and interwoven elements of thermally-conductive material such as aluminium alloy ribbon.

## Description

This invention relates to a fabric material for use as an adsorbent, more particularly to a cloth or fabric formed of woven carbon fibre for such use.

The use of woven carbon fibre cloth as an adsorbent for hydrogen has been proposed. The cloth would be held, usually folded, inside a container which is maintained at cryogenic temperature, being surrounded by liquid nitrogen, for example. At cryogenic temperatures the cloth is capable of adsorbing a significant amount of hydrogen - up to a density of one and a half times that of the liquid. Consequently, such an adsorbent could theoretically be utilised in a hydrogen fuel cell, for a hydrogen-powered vehicle or the like.

Because the adsorption process is exothermic, carbon fibre cloth warms as hydrogen is adsorbed. As the temperature of the carbon fibre material rises, so its capacity to adsorb further hydrogen is reduced until it cools again to cryogenic temperature. As carbon is a relatively poor thermal conductor this can take some time, and the consequent time taken to fully "charge" the carbon with hydrogen (ie to adsorb the maximum amount possible of hydrogen) militates against the use of the carbon fibre fabric in a hydrogen fuel cell. Moreover, this problem is exacerbated where the carbon fibre fabric is tightly folded so as to minimise the volume of container to be cryogenically refrigerated.

Accordingly the present invention provides a fabric material formed of woven carbon fibre for use as an adsorbent at cryogenic temperatures, wherein the material comprises a weave formed of material having a relatively high thermal conductivity.

For the avoidance of doubt, as used herein the terms "weave' and "woven" refer to an arrangement in which there is both a warp and a weft. Thus, the fabric in accordance with the invention comprises both a carbon fibre warp and welt, and also a high thermal conductivity material warp and welt which is woven fairly sparsely into the carbon fibre.

The invention also provides a method of manufacturing a carbon fibre fabric material for use as an adsorbent comprising weaving individual carbon fibres, or threads thereof and interweaving one or more elements of thermally-conductive material through both the warp and weft thereof.

The thermally-conductive material, suitably in the form of either wire or thin ribbon for example, is most preferably interwoven with the carbon fibre. Such an arrangement not only provides a plurality of short paths for thermal transfer (particularly when the material is tightly bunched or folded) between adjacent carbon fibres and between the fibres and the walls of the container (which enables rapid heat transfer and thus the material to be rapidly fully "charged" with hydrogen) but also provides additional strength to the fabric material.

The interwoven thermally-conductive material, such as metal (eg aluminium) or an alloy thereof can be easily and inexpensively incorporated into the fabric material as part of the weaving process and, as is known in the art, may be incorporated in various weave patterns such as might be most appropriate for a given pattern of folding for the finished adsorbent fabric.

Although described above for the adsorption of hydrogen in a fuel cell, it will be appreciated that the invention has many other applications. For example, provided at least some of the carbon fibres in the fabric material are activated, the material can be used for adsorbing carbon dioxide, in applications such as beverage cooling (see our co-pending European Patent Application Nos. 752564 and 853219 and British Patent Application No. 2314066), heating mats and the like.

## Claims

1. A fabric material formed of woven carbon fibre for use as an adsorbent at cryogenic temperatures, wherein the material comprises a weave formed of material having a relatively high thermal conductivity.

2. A material as claimed in Claim 1 wherein the thermally-conductive material is in the form of at least one wire, or thin ribbon, interwoven with both the warp and the weft of the carbon fibre.

3. A material as claimed in Claim 1 or Claim 2 wherein the thermally-conductive material is a metal or alloy.

4. A material as claimed in Claim 3 wherein the thermally-conductive material is aluminium, or aluminium alloy.

5. A material as claimed in any preceding Claim wherein at least some of the carbon of the carbon fibres is activated for adsorption of carbon dioxide.

6. A material substantially as hereinbefore described.

7. A method of manufacturing a carbon fibre fabric material for use as an adsorbent comprising weaving individual carbon fibres, or threads thereof, and interweaving one or more elements of thermally-conductive material through both the warp and weft thereof.
